# EUROPÄISCHE PATENTSCHRIFT

(11) **EP 0 853 498 B1**
(45) Veröffentlichungstag und Bekanntmachung des Hinweises auf die Patenterteilung: **06.03.2002**
(21) Anmeldenummer: 96934527.1
(22) Anmeldetag: 04.10.1996
(51) Int. Cl.: B05B 1/00

(54) **VORRICHTUNG ZUM HALTERN EINES FLUIDISCHEN BAUTEILS**
DEVICE FOR MOUNTING A COMPONENT EXPOSED TO A PRESSURIZED FLUID
DISPOSITIF DE FIXATION POUR COMPOSANT EXPOSE A UN FLUIDE SOUS PRESSION

(30) Priorität: 04.10.1995 DE 19536903
(43) Veröffentlichungstag der Anmeldung: 22.07.1998
(73) Patentinhaber: Boehringer Ingelheim International GmbH, 55218 Ingelheim am Rhein (DE)
(72) Erfinder: EICHER, Joachim, D-44227 Dortmund (DE); GESER, Johannes, D-44227 Dortmund (DE)
(74) Vertreter: Laudien, Dieter, Dr.
(86) Internationale Anmeldenummer: EP9604310
(87) Internationale Veröffentlichungsnummer: WO9712683

(56) Entgegenhaltungen:
- EP-A- 0 046 664
- WO-A-94/07607
- US-A- 3 997 111
- US-A- 4 313 570
- US-A- 5 033 681

## Beschreibung

Die Erfindung betrifft eine Vorrichtung zum Haltern eines fluidischen Bauteils, insbesondere von Düsen, speziell im Hochdruckbereich. Von besonderem Interesse sind Halterungen für mikrostrukturierte Bauteile, insbesondere von mikrostrukturierten Düsen.
Die Erfindung betrifft insbesondere eine Vorrichtung zum Haltern einer mikrostrukturierten Düse, d.h. durch Mikrotechnik hergestellt, wie sie in Verneblern zur Erzeugung von treibgasfreien medizinischen Aerosolen zur Inhalation Verwendung findet.
Solche Düsen sind beispielsweise in der WO94/07607 offenbart. Charakteristisches Merkmal dieser Düsen ist, daß sich damit inhalierbare Tröpfchen mit einem mittleren Teilchendurchmesser von ca. 5 µm generieren lassen, wobei die zu vernebelnde Flüssigkeit unter hohem Druck - der zwischen 50 und 400 bar und mehr - (gegebenenfalls bis 600 bar) liegt - durch eine Düse, die eine Öffnung von weniger als 10 µm aufweist, versprüht wird. Solche Düsen können beispielsweise aus dünnen Siliziumplatten und Glasplatten hergestellt werden und weisen Außenmaße auf, die im mm-Bereich liegen. Eine typische Düse besteht beispielsweise aus einem aus zwei Platten zusammengesetzten Quader, der Kantenlängen von 1,1 x 1,5 x 2,0 mm aufweist. Vernebler zur Erzeugung von treibgasfreien Aerosolen, in denen die erfindungsgemäßen Vorrichtungen zum Halten einer Düse eingesetzt werden können, sind beispielsweise aus der WO91/14468 bekannt.

Die Erfindung bezweckt, eine derartige Vorrichtung anzugeben, die bevorzugt für ein fluidisches Bauteil aus verschleißfestem, hartem und damit im allgemeinen sprödem Material geeignet ist.

Als fluidisches Bauteil wird ein Bauteil bezeichnet, das einem unter Druck stehenden Fluid ausgesetzt ist, wobei der Druck auch innerhalb des Bauteils, z.B. in einer Düsenbohrung, ansteht. Ein derartiges Bauteil kann z.B. durch Einpressen in eine Halterung aus hartem Material druckdicht gehaltert werden, wenn das Material des Bauteils mechanische Kräfte aufnehmen kann, ohne zu zerbrechen oder sich in nicht annehmbarem Ausmaß zu verformen. Im Hochdruckbereich werden Dichtungen aus verformbarem Material, z.B. Kupfer, oder aus Hartwerkstoff verwendet, die mit großer Kraft zusammengepreßt werden. Bei Bauteilen aus sprödem Material erfordern die bekannten Verfahren zur druckdichten Halterung des Bauteils einen erheblichen Aufwand und große Sorgfalt. Über die Lebensdauer eines derartig gehalterten fluidischen Bauteils sind nur wenig zuverlässige Angaben möglich.

US - 3 997 111 beschreibt eine Fluidstrahl-Schneidvorrichtung, mit der ein Fluidstrahl mit hoher Geschwindigkeit erzeugt wird, der zum Schneiden, Bohren oder Abtragen von Material benutzt wird. Der Düsenkörper ist zylindrisch und besteht z.B. aus Saphir oder Korund. Der Düsenkörper ist in einem zylindrischen Ring eingefaßt, der aus mäßig nachgebendem Kunststoff-Material besteht. Der Einfaßring ist in eine ringförmige Aussparung des Düsenträgers eingepreßt und dichtet den Düsenkörper gegen den Düsenträger ab.

In der oberbegriffsmäßigen US - 4 313 570 ist ein Düsenhalter für eine Wasserstrahl-Schneidvorrichtung angegeben, bei der der Düsenkörper von einem Ring aus elastomeren Material umgeben ist, der seinerseits in einer Aussparung des Halters angeordnet ist. Die Aussparung hat die Form eines geraden Zylinders. Der Querschnitt des Ringes ist rechteckig. Die Mantelfläche der Aussparung sowie die äußere und innere Mantelfläche des Ringes sind konzentrisch zu Achse des Düsenkörpers angeordnet und laufen zueinander und zur Achse des Düsenkörpers parallel.

Damit stellt sich die Aufgabe, eine Vorrichtung zum Haltern eines fluidischen Bauteils anzugeben, die auch für Bauteile aus verschleißfestem, hartem und damit im allgemeinen sprödem Material geeignet ist, und die im Bauteil keine unzulässig großen punktuellen Materialspannungen erzeugt.

Diese Aufgabe wird erfindungsgemäß gelöst durch eine Vorrichtung mit einem fluidischen Bauteil, das während der Benutzung der Vorrichtung einem Fluiddruck ausgesetzt ist, bestehend aus einem Halter mit einer Aussparung, innerhalb welcher das fluidische Bauteil angeordnet ist, und der das fluidische Bauteil auf dessen Niederdruckseite berührt, und einem elastomeren Formteil, das das fluidische Bauteil auf seinem ganzen Umfang umgibt, und das mindestens eine freie Fläche hat, die während der Benutzung der Vorrichtung dem unter Druck stehenden Fluid ausgesetzt ist,
dadurch gekennzeichnet, daß
- die Aussparung kegelstumpfförmig ist mit einem Durchmesser, der auf der Hochdruckseite größer ist als auf der Niederdruckseite, und
- das elastomere Formteil kegelstumpfförmig ist mit einer Außenkontur, die an die Innenkontur des Halters angepaßt ist, und mit einer Innenkontur, die an die Außenkontur des fluidischen Bauteils angepaßt ist.

Das elastomere Formteil wird bevorzugt als Spritzgußteil hergestellt, wobei das Präelastomer blasenfrei in eine Form eingefüllt wird, die an die Konturen des Halters und des fluidischen Bauteils angepaßt ist. Das Präelastomer härtet in der Form bevorzugt unter Druck aus.

Das elastomere Formteil kann auch an der Stelle hergestellt werden, an der es das fluidische Bauteil halten soll.

Ein derartiges elastomeres Formteil verhält sich etwa wie eine inkompressible Flüssigkeit. Es ist paßgenau zum Halter und zum fluidischen Bauteil.

Das elastomere Formteil umgibt das fluidische Bauteil auf dessen ganzem Umfang. Das elastomere Formteil ist nur auf der Druckseite dem Fluiddruck ausgesetzt, nicht an den Seiten, an denen es an den Halter und an das fluidische Bauteil angepaßt ist. Das elastomere Formteil ermöglicht die Druckkompensation am fluidischen Bauteil. Das elastomere Formteil hat keine freie Fläche zur Niederdruckseite. Das elastomere Formteil kann z.B. aus Naturgummi oder Synthesegummi wie Silikongummi oder Polyurethan bestehen.

Das fluidische Bauteil kann aus verschleißfestem, hartem und damit im allgemeinen sprödem Material (wie Silizium, Glas, Keramik, Edelstein, z. B. Saphir, Rubin, Diamant) oder aus duktilem Material mit verschleißfester harter Oberfläche (wie Kunststoff, Kupfer, Kupfer hartverchromt, Messing, Aluminium, Stahl, Stahl mit gehärteter Oberfläche) bestehen. Es kann einstückig gefertigt oder aus mehreren Teilen zusammengesetzt sein, wobei die Teile aus unterschiedlichem Material bestehen können. Das fluidische Bauteil kann Hohlräume, Aussparungen oder Kanalstrukturen enthalten, z. B. eine Düsenstruktur.

Der Halter kann aus einem fast beliebigen Material bestehen, bevorzugt aus Metall oder aus Kunststoff, und kann ein Drehkörper oder ein Körper in beliebiger anderer Form sein. Er kann als Umformteil, als Gußteil oder durch spanende Bearbeitung hergestellt werden.

Es kann zweckmäßig sein, auf das elastomere Formteil ständig eine mechanische Kraft einwirken zu lassen, die das elastomere Formteil unter Vorspannung setzt. Hierzu sind eine Preßpassung oder ein (oder mehrere) Verdrängungskörper geeignet, die auf oder in das elastomere Formteil drücken.

Die erfindungsgemäße Vorrichtung hat folgende Vorteile:
- Im fluidischen Bauteil entstehen keine nicht annehmbaren lokalen Spannungsspitzen, weil wegen der "schwimmenden Halterung" der Fluiddruck innerhalb und außerhalb des fluidischen Bauteils in praktisch gleicher Größe ansteht.
- Die von dem Halter und dem Fluiddruck über das angepaßte elastomere Formteil auf das fluidische Bauteil ausgeübten Kräfte erzeugen keine Verformung des fluidischen Bauteils.
- Ein fluidisches Bauteil aus einem in gewisssem Umfang duktilem Material läßt sich genau so haltern wie ein fluidisches Bauteil aus sprödem Material.
- Die Halterung des fluidischen Bauteils bleibt auch dann dicht, wenn der Fluiddruck nachläßt oder sich ein (geringer) Unterdruck einstellt.
- Die Halterung ist unempfindlich gegen dynamische Hochdruckbelastung, z. B. durch Druckstöße.
- Das fluidische Bauteil und das elastomere Formteil lassen sich im Halter auf einfache Weise schonend und ohne Justieraufwand montieren. Für das fluidische Bauteil besteht keine Sprödbruchgefahr und für das elastomere Formteil keine Gefahr des Herausrutschens aus dem Halter.
- Sie ist speziell für ein fluidisches Bauteil in Miniaturausführung geeignet.

Die erfindungsgemäße Vorrichtung wird an Hand der Figuren weiter erläutert.

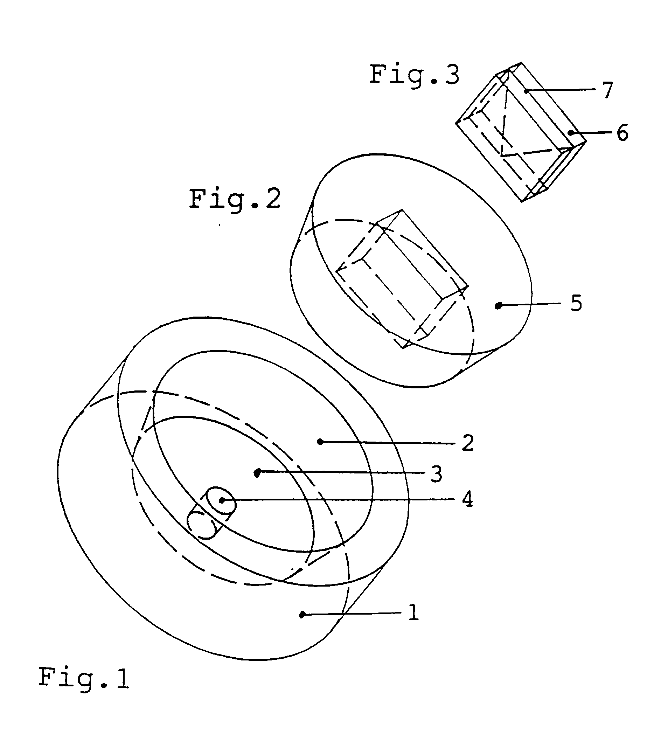

Figur 1 zeigt den zylindrischen Halter (1) aus Metall in Schrägansicht. Er hat eine kegelstumpfförmige Aussparung (2), deren Durchmesser auf der Hochdruckseite etwas größer ist als auf der Niederdruckseite. Der Halter hat im Boden (3) eine Öffnung (4). Der Mantel des Halters kann kegelstumpfförmig sein.

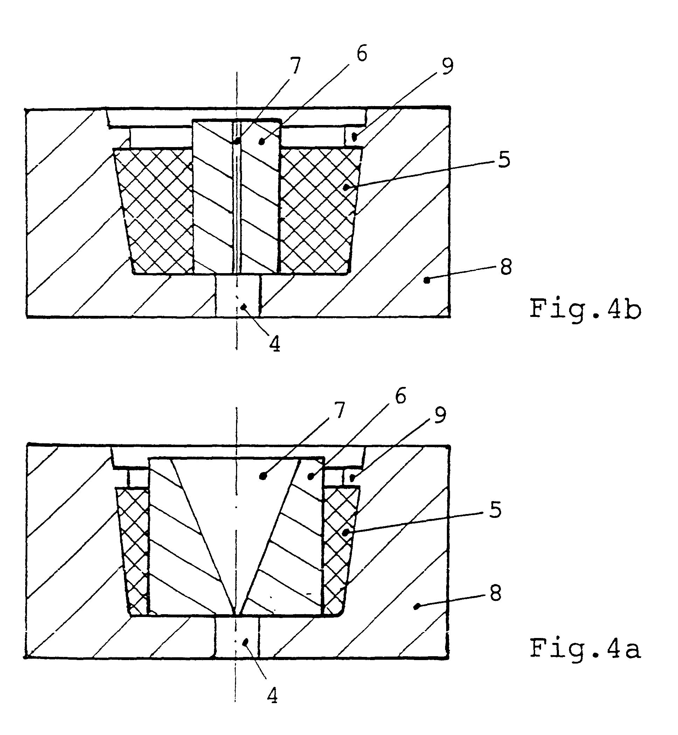

Figur 2 zeigt das elastomere Formteil (5), dessen Form an die Form des Halters nach Figur 1 und an die Form des fluidischen Bauteils nach Figur 3 angepaßt ist.

Figur 3 zeigt ein fluidisches Bauteil (6), das aus zwei rechteckigen Platten besteht, die an ihrer Berührungsfläche gefügt sind. Mindestens eine der Platten ist mit einer Kanalstruktur (7), versehen, die eine Düse auf der Niederdruckseite enthält.

Figur 4a und Figur 4b zeigen je einen Querschnitt durch eine andere Ausführungsform der Vorrichtung in jeweils einer Ebene in der Achse der Vorrichtung und parallel zu jeweils einer Seite des fluidischen Bauteils. Der Halter (8) ist mit einem Ring (9) versehen, der über den Rand des elastomeren Formteils (5) ragt.

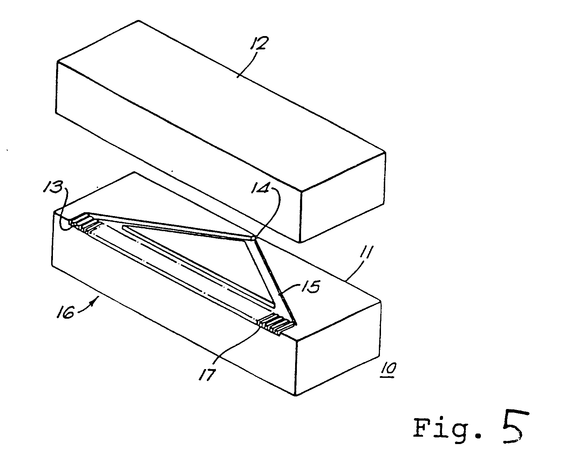

In Figur 5 ist ein mikrostrukturiertes fluidisches Bauteil in Form einer Düsenanordnung 10, bestehend aus einer Basisplatte 11 und einer Deckplatte 12 dargestellt. Zur besseren Anschauung sind die beiden Platten getrennt dargestellt. Im fertigen Zustand sind die beiden Platten fest miteinander verbunden, so daß die zu vernebelnde Flüssigkeit durch die Filteranordnung 13 auf der Einlaßseite 16 (Hochdruckseite) in die Düsenanordnung 10 eindringt und über die engen Kanäle 17 und die beiden breiteren Kanäle 15 zum Düsenauslaß 14 (Niederdruckseite gelangt). Die Platten 11 und 12 können aus Silizium oder Glas gefertigt sein. Weitere Details der Düse sind in der WO94/07607 offenbart, auf die hiermit inhaltlich Bezug genommen wird.

### Beispiel: Halterung für eine Zerstäuberdüse in Miniaturausführung

Diese Vorrichtung besteht aus einem zylindrischen Halter aus Stahl mit einem Außendurchmesser von 3,2 mm und einer Höhe von 2,6 mm. Er enthält eine Aussparung mit einem Innendurchmesser von 2,3 mm auf der Hochdruckseite und 2,1 mm auf der Niederdruckseite. Der Boden des Halters ist 0,4 mm dick und enthält eine Bohrung von 0,8 mm Durchmesser.

Das elastomere Formteil aus Silikongummi ist ein Kegelstumpf. Dieser hat vor dem Einsetzen in den Halter einen Durchmesser von 2,3 mm auf der Hochdruckseite und von 2,2, mm auf der Niederdruckseite und ist 1,8 mm hoch. Er enthält in seiner ganzen Höhe eine zu seiner Achse symmetrisch angeordnete Aussparung mit 1,0 mm Breite und 1,4 mm Länge.

Das fluidische Bauteil ist ein aus zwei Siliziumplatten zusammengesetzter Quader, der 1,1 mm breit, 1,5 mm lang und 2,0 mm hoch ist. Es enthält in der Berührungsfläche der Platten eine flache dreieckförmige 400 µm dicke Aussparung, die in einem 50 µm breiten, 50 µm dicken und 200 µm langen Kanal endet.

Die Vorrichtung wird auf einem Behälter befestigt, in dem das zu zerstäubende Fluid enthalten ist. Der Druck des Fluids innerhalb des fluidischen Bauteils beträgt 32 MPa (320 bar).

## Patentansprüche

1. Vorrichtung mit einem fluidischen Bauteil, das während der Benutzung der Vorrichtung einem Fluiddruck ausgesetzt ist, bestehend aus einem Halter (1; 8) mit einer Aussparung, innerhalb welcher das fluidische Bauteil angeordnet ist, und der das fluidische Bauteil auf dessen Niederdruckseite berührt, und einem elastomeren Formteil (5), das das fluidische Bauteil auf seinem ganzen Umfang umgibt, und das mindestens eine freie Fläche hat, die während der Benutzung der Vorrichtung dem unter Druck stehenden Fluid ausgesetzt ist,
**dadurch gekennzeichnet, daß**
- die Aussparung (2) kegelstumpfförmig ist mit einem Durchmesser, der auf der Hochdruckseite größer ist als auf der Niederdruckseite, und
- das elastomere Formteil (5) kegelstumpfförmig ist mit einer Außenkontur, die an die Innenkontur des Halters (1) angepaßt ist, und einer Innenkontur, die an die Außenkontur des fluidischen Bauteils (6) angepaßt ist.

2. Vorrichtung nach Anspruch 1, wobei
- das fluidische Bauteil (6) aus verschleißfestem, hartem und damit im allgemeinen sprödem Material oder aus duktilem Material oder aus einer Kombination dieser Materialien besteht.

3. Vorrichtung nach den Ansprüchen 1 und 2, wobei
- das fluidische Bauteil (6) aus mehreren Teilen zusammengesetzt ist oder
- aus einem einstückigen fluidischen Bauteil besteht.

4. Vorrichtung nach den Ansprüchen 1 bis 3, wobei
- das fluidische Bauteil (6) aus Silizium oder Glas besteht und eine Kanalstruktur aufweist.

5. Vorrichtung nach den Ansprüchen 1 bis 3, wobei
- das fluidische Bauteil (6) mikrostrukturiert ist und aus Silizium und Glas besteht und eine Kanalstruktur aufweist.

6. Vorrichtung nach Anspruch 1, wobei
- das elastomere Formteil (5) aus Naturgummi oder Synthesegummi besteht.

7. Vorrichtung nach den Ansprüchen 1 und 6, wobei
- das elastomere Formteil (5) aus Polyurethan besteht.

## Claims

1. Device having a fluidic component which is exposed to a fluid pressure when the device is used, consisting of a holder (1; 8) with a recess inside which the fluidic component is mounted, and which makes contact with the fluidic component on the low pressure side thereof, and an elastomeric moulding (5) which surrounds the fluidic component around its entire periphery, and which has at least one free surface which is exposed to the pressurised fluid when the device is in use, **characterised in that**
- the recess (2) is frustum-shaped with a diameter which is larger on the high pressure side than on the low pressure side, and
- the elastomeric moulding (5) is frustum-shaped with an outer contour which is matched to the inner contour of the holder (1), and with an inner contour which is matched to the outer contour of the fluidic component (6).

2. Device according to claim 1, wherein
- the fluidic component (6) consists of wear-resistant, hard and thus generally brittle material or a ductile material or a combination of these materials.

3. Device according to claims 1 and 2, wherein
- the fluidic component (6) is made up of a plurality of components or
- consists of a one-piece fluidic component.

4. Device according to claims 1 to 3, wherein
- the fluidic component (6) consists of silicon or glass and has a channel structure.

5. Device according to claims 1 to 3, wherein
- the fluidic component (6) is microstructured and consists of silicon and glass and has a channel

6. Device according to claim 1, wherein
- the elastomeric moulding (5) consists of natural rubber or synthetic rubber.

7. Device according to claims 1 to 6, wherein
- the elastomeric moulding (5) consists of polyurethane.

## Revendications

1. Appareil comprenant un composant fluidique exposé à la pression d'un fluide pendant l'utilisation de l'appareil, constitué par un support (1 ; 8) avec un évidement, à l'intérieur duquel est agencé le composant fluidique et en contact avec le composant fluidique sur son côté basse pression, et par une pièce élastomère en forme (5) qui entoure le composant fluidique sur la totalité de sa périphérie et présente au moins une surface libre exposée au fluide sous pression pendant l'utilisation de l'appareil, **caractérisé en ce que** :
- l'évidement (2) est en forme de tronc de cône avec un diamètre plus élevé du côté haute pression que du côté basse pression, et
- la pièce élastomère en forme (5) est en forme de tronc de cône avec un contour extérieur adapté au contour intérieur du support (1), et avec un contour intérieur adapté au contour extérieur du composant fluidique (6).

2. Appareil selon la revendication 1, dans lequel :
- le composant fluidique (6) est en matériau dur résistant à l'usure et par conséquent généralement cassant, ou bien en matériau ductile, ou encore en une combinaison de ces matériaux.

3. Appareil selon les revendications 1 et 2, dans lequel :
- le composant fluidique (6) est composé de plusieurs parties, ou bien
- il est constitué par un composant fluidique d'une seule pièce.

4. Appareil selon les revendications 1 à 3, dans lequel :
- le composant fluidique (6) est en silicium ou en verre, et présente une structure de canaux.

5. Appareil selon les revendications 1 à 3, dans lequel :
- le composant fluidique (6) présente une microstructure, il est réalisé en silicium et en verre, et il présente une structure en canaux.

6. Appareil selon la revendication 1, dans lequel :
- la pièce élastomère en forme (5) est réalisée en caoutchouc naturel ou en caoutchouc de synthèse.

7. Appareil selon les revendications 1 et 6, dans lequel :
- la pièce élastomère en forme (5) est réalisée en polyuréthane.
